# EUROPEAN PATENT SPECIFICATION

(11) **EP 3 970 040 B1**
(45) Date of publication and mention of the grant of the patent: **07.06.2023**
(21) Application number: 20724268.6
(22) Date of filing: 13.04.2020
(51) Int. Cl.: H04L 9/40, G06F 21/44, G06F 21/62, G06F 21/55, H04L 9/32

(54) **MITIGATION OF RANSOMWARE IN INTEGRATED, ISOLATED APPLICATIONS**
VERMINDERUNG VON RANSOMWARE IN INTEGRIERTEN, ISOLIERTEN ANWENDUNGEN
ATTÉNUATION DE LOGICIEL RANÇONNEUR DANS DES APPLICATIONS INTÉGRÉES ISOLÉES

(30) Priority: 17.05.2019 US 201916415690
(43) Date of publication of application: 23.03.2022
(73) Proprietor: Microsoft Technology Licensing, LLC, Redmond, WA 98052-6399 (US)
(72) Inventor: SCHWARTZ, Jonathan David, Redmond, Washington 98052-6399 (US); TARNOUSKAYA, Anastasiya, Redmond, Washington 98052-6399 (US)
(74) Representative: Grünecker Patent- und Rechtsanwälte PartG mbB
(86) International application number: PCT/US2020/027877
(87) International publication number: WO 2020/236338

(56) References cited:
- US-A1- 2013 047 195
- US-A1- 2017 295 159
- US-A1- 2019 103 968

## Description

In isolated computing arrangements, applications may be executed in an environment that is partially or completely isolated from the main computing environment of a computing host. Such isolated arrangements may provide for additional security to the host environment by restricting and/or preventing access to resources of the host environment by the applications. In many cases, an application executing in an isolated environment may not be trusted or may have a higher risk of being susceptible to malicious activity, thereby rendering an isolation barrier between the application and host environment more important from a security standpoint. In other words, even if malicious code was executing in the isolated environment of the application, the risk to the host environment may be minimized due to the isolation barrier.

However, in order to enhance a user's experience, certain holes in the isolation barrier may be intentionally present, such as by allowing access to files of the host environment by the application in the isolated environment. While such holes in the isolation barrier may improve integration between the isolated and host environments, these seemingly benign attempts to enhance the user experience may nevertheless create security vulnerabilities for the host environment. As an example, malicious code referred to as ransomware that may enter the isolated environment may be enabled to encrypt a user's personal data stored in the host environment with an encryption key known only to an attacker. In such situations, the user is forced to pay a ransom to the attacker in order to regain their ability to access their own data. Thus, even if an application may be isolated, openings in the isolation barrier may still result in these and other types of vulnerabilities.

US 2019/0103968 A1 discloses a token relay system that enables a client requester to acquire a properly scoped access token issued by a token issuer authority in a secure manner. The client requestor is a non-confidential client. The token relay system is a trusted and confidential client of the token issuer authority. Upon receiving an access token request from a client, the token relay system is configured to send a request to the token issuer authority requesting an access token on behalf of the requestor. The token issuer authority then responds by issuing an access token with the appropriate scope to the token relay system. The token relay system then forwards the access token received from the token issuer to the requesting client.

It is therefore the object of the present invention to provide an improved method for enabling access to a resource in a secured manner using an authorization token, as well as a corresponding system for providing an authorization token, and a corresponding computer-readable storage medium.

This object is solved by the subject matter of the independent claims.

Preferred embodiments are defined by the dependent claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Methods, systems, apparatuses, and computer program products are provided for enabling access to a resource in a secured manner. A token request from an application executing in a first computing environment (e.g., a virtual machine) may be received in a second computing environment (e.g., a host computing environment). The host computing environment may assign a trust level to the received token request, such as a trust level that indicates that the first computing environment should not be trusted. The token request, along with the trust level, may be provided to a token issuer (e.g., on an authorization server) that may validate identity information in the token and generate an authorization token that includes a trust indication. The trust indication may indicate, for instance, a trust level of the second computing environment. The host computing environment may obtain the authorization token and provide it to the application. When the application executing in the second computing environment transmits the authorization token to a resource manager to access a resource, the resource manager may be configured to perform a precautionary action prior to providing access, such as creating a backup of the resource.

Further features and advantages of the invention, as well as the structure and operation of various embodiments, are described in detail below with reference to the accompanying drawings. It is noted that the invention is not limited to the specific embodiments described herein. Such embodiments are presented herein for illustrative purposes only. Additional embodiments will be apparent to persons skilled in the relevant art(s) based on the teachings contained herein.

### BRIEF DESCRIPTION OF THE DRA WINGS/FIGURES

The accompanying drawings, which are incorporated herein and form a part of the specification, illustrate embodiments of the present application and, together with the description, further serve to explain the principles of the embodiments and to enable a person skilled in the pertinent art to make and use the embodiments.
FIG. 1 shows a block diagram of a system for providing access to a resource in a secured manner, according to an example embodiment.
FIG. 2 shows a flowchart of a method for providing an authorization that includes a trust indication to an application, according to an example embodiment.
FIG. 3 shows a block diagram of a system for providing access to a network resource in a secured manner, according to an example embodiment.
FIG. 4 shows a flowchart of a method for generating an authorization token that includes a trust indication, according to an example embodiment.
FIG. 5 shows a flowchart of a method for performing a precautionary action to protect a resource, according to an example embodiment.
FIG. 6 shows a block diagram of a system for providing access to a local resource in a secured manner, according to an example embodiment.
FIG. 7 shows a block diagram of an example computing device that may be used to implement example embodiments.

The features and advantages of the present invention will become more apparent from the detailed description set forth below when taken in conjunction with the drawings, in which like reference characters identify corresponding elements throughout. In the drawings, like reference numbers generally indicate identical, functionally similar, and/or structurally similar elements. The drawing in which an element first appears is indicated by the leftmost digit(s) in the corresponding reference number.

### DETAILED DESCRIPTION

### I. Introduction

The present specification and accompanying drawings disclose one or more embodiments that incorporate the features of the present invention. The scope of the present invention is not limited to the disclosed embodiments. The disclosed embodiments merely exemplify the present invention, and modified versions of the disclosed embodiments are also encompassed by the present invention. Embodiments of the present invention are defined by the claims appended hereto.

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an example embodiment, it is submitted that it is within the knowledge of one skilled in the art to effect such feature, structure, or characteristic in connection with other embodiments whether or not explicitly described.

In the discussion, unless otherwise stated, adjectives such as "substantially" and "about" modifying a condition or relationship characteristic of a feature or features of an example embodiment of the disclosure, are understood to mean that the condition or characteristic is defined to within tolerances that are acceptable for operation of the embodiment for an application for which it is intended.

Numerous exemplary embodiments are described as follows. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

### II. Example Implementations

In isolated computing arrangements, applications may be executed in an environment that is partially or completely isolated from the main computing environment of a computing host. Such isolated arrangements may provide for additional security to the host environment by restricting and/or preventing access to resources of the host environment by the applications. In many cases, an application executing in an isolated environment may not be trusted or may have a higher risk of being susceptible to malicious activity, thereby rendering an isolation barrier between the application and host environment more important from a security standpoint. In other words, even if malicious code was executing in the isolated environment of the application, the risk to the host environment may be minimized due to the isolation barrier.

However, in order to enhance a user's experience, certain holes in the isolation barrier may be intentionally present, such as by allowing access to files of the host environment by the application in the isolated environment. While such holes in the isolation barrier may improve integration between the isolated and host environments, these seemingly benign attempts to enhance the user experience may nevertheless create security vulnerabilities for the host environment. As an example, malicious code referred to as ransomware that may enter the isolated environment may be enabled to encrypt a user's personal data stored in the host environment with an encryption key known only to an attacker. In such situations, the user is forced to pay a ransom to the attacker in order to regain their ability to access their own data. Thus, even if an application may be isolated, openings in the isolation barrier may still result in these and other types of vulnerabilities.

Embodiments described herein address these and other issues by providing a system for enabling access to a resource in a trusted manner. In an example system, a first environment that receives a token request from another environment at least partially isolated therefrom (e.g., an application executing on a virtual machine of the first environment) may obtain an authorization token that includes a trust indication. The trust indication may be indicative of a trust level of the environment in which the token request was initiated, which may comprise an untrusted environment that may be vulnerable to malicious activities. When the application attempts to access a trusted resource using the authorization token, a resource provider may take a preventative action.

In this manner, resources may be protected against malicious activity or malicious code, such as ransomware or any other type of malware, malicious code or breach in which an unauthorized entity is attempting to gain access to a user's resources (e.g., data or services). For instance, even if an attacker attempted to encrypt a user's data in an attempt to collect a ransom, a backup copy of the user's resources may be automatically created when the attacker accesses the data based on the trust indication included in the authorization token. The backup copy of the user's resources, which may be stored in manner inaccessible to the attacker and/or encrypted may be later restored by the user such that the user need not pay a ransom to the attacker. As such, the harm caused by malicious activities of a less-trusted computing environment may be reduced or entirely prevented.

Enabling access to resources in a secured manner as described herein has numerous advantages, including improving the security of a network and/or the resources (e.g., computing devices, storage devices, etc.) coupled thereto. For example, by providing an authorization token that includes a trust indication, resource providers that may provide access to resources in response to receiving the authorization token (which may be local resource providers or resource servers accessible over a network) may take one or more preventative actions to protect the resource, such as creating a backup copy of the resource, limiting scope of access (e.g., providing only a read-only access, instead of a read/write access), performing an enhanced authentication procedure (e.g., a two-factor authentication), or other preventative action. As a result, resources may be protected against malicious activities initiated from environments that are deemed to be less secure environments. Furthermore, because resource providers may receive authentication tokens that include trust indications embedded therein, resource providers may be configured to detect the presence of abnormal network activity (e.g., where a particular application is accessing an abnormal number of resources with such an authorization token). As a result, malicious activity occurring across a network and/or within resources coupled thereto may be contained, reduced, and/or prevented in accordance with described herein.

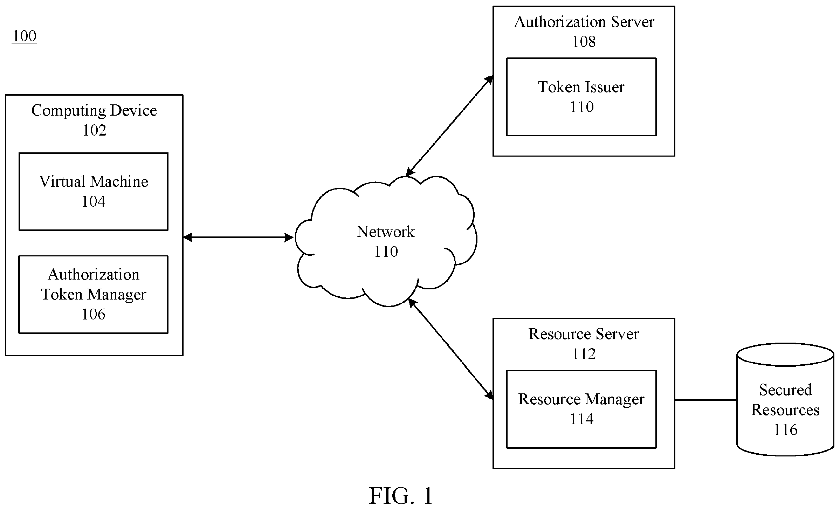

Example embodiments are described as follows for systems and methods for providing access to a resource in a secured manner. For instance, FIG. 1 shows a block diagram of a system 100, according to an example embodiment. As shown in FIG. 1, system 100 includes a computing device 102, an authorization server 108, and a resource server 112, which are communicatively coupled by a network 110, and secured resources 116 coupled to resource server 112. System 100 may comprise any number of computing devices and/or servers, including those illustrated in FIG. 1 and optionally one or more further devices not expressly illustrated. As shown in FIG. 1, computing device 102 includes a virtual machine 104 hosted therein, and an authorization token manager 106. As described in greater detail below, authorization token manager 106 may be configured to receive a token request from an application executing on virtual machine 104, obtain an authorization token with a trust indication, and provide the authorization token including the trust indication to the application in virtual machine 104. Authorization server 108 includes a token issuer 110. Resource server 112 includes a resource manager 114. Although FIG. 1 is described with respect to an application executing on virtual machine 104, such an implementation is not intended to be limiting. Other types of partially and/or fully isolated computing environments in which token requests may originate are also contemplated, as described later. System 100 is further described as follows.

Network 110 may include one or more of any of a local area network (LAN), a wide area network (WAN), a personal area network (PAN), a combination of communication networks, such as the Internet, and/or a virtual network. In example implementations, computing device 102, authorization server 108, resource server 112, and/or secured resources 116 may be communicatively coupled to each other via network 110. In an implementation, any one or more of computing device 102, authorization server 108, resource server 112, and/or secured resources 116 may communicate via one or more application programming interfaces (API), and/or according to other interfaces and/or techniques. Computing device 102, authorization server 108, resource server 112, and/or secured resources 116 may each include at least one network interface that enables communications with each other. Examples of such a network interface, wired or wireless, include an IEEE 802.11 wireless LAN (WLAN) wireless interface, a Worldwide Interoperability for Microwave Access (Wi-MAX) interface, an Ethernet interface, a Universal Serial Bus (USB) interface, a cellular network interface, a Bluetooth^{™} interface, a near field communication (NFC) interface, etc. Further examples of network interfaces are described elsewhere herein.

Computing device 102 includes any computing device of one or more users (e.g., individual users, family users, enterprise users, governmental users, etc.) that may comprise one or more applications, operating systems, virtual machines, storage devices, etc. that may be executed, hosted, and/or stored therein or via one or more other computing devices via network 110. In some examples, computing device 102 may access one or more server devices such as authentication server 108 and/or resource server 112 to access one or more secured resources 116, as described herein. Computing device 102 may include any number of computing devices, including tens, hundreds, thousands, millions, or even greater numbers of computing devices. Computing devices of computing device 102 may each be may be any type of stationary or mobile computing device, including a mobile computer or mobile computing device (e.g., a Microsoft ^{®} Surface^{®} device, a personal digital assistant (PDA), a laptop computer, a notebook computer, a tablet computer such as an Apple iPad^{™}, a netbook, etc.), a mobile phone, a wearable computing device, or other type of mobile device, or a stationary computing device such as a desktop computer or PC (personal computer), or a server. Computing device 102 is not limited to a physical machine, but may include other types of machines or nodes, such as a virtual machine. Computing device 102 may each interface with authorization server 108 and/or resource server 112 through APIs and/or by other mechanisms. Note that any number of program interfaces may be present.

Authorization server 108 may comprise any computing device, server, and/or service for issuing one or more authorization tokens to computing devices of network 110 requesting such tokens. As will be described in greater detail below, an authorization token may include any object (e.g., a set of data) that enables a computing device, computing environment, and/or applications to access a resource. For example, an authorization token may be a file or other object that includes one or more of an identifier for the token, an identifier for the associated logon session, an identifier for an application requesting access, a user identifier for the user of the application requesting access, and an indication of one or more privileges provided by the authorization token.

In some examples, authorization server 108 may comprise an identity service or identity provider configured to validate identity information of an entity requesting an authorization token, including but not limited to user login credentials (e.g., a user name and/or password), a user alias, an account number, biometric information, or any other information or credentials that may be used to secure access to a resource. In accordance with implementations, token issuer 110 of authorization server 108 may generate and issue a token for transmission to computing device 102 that further includes a trust indication that may be indicative of a trust level of the environment in which the token was requested and/or intended to be used to access a resource (e.g., secured resources 116). In some instances, authorization server 108 may configured to provide, based on validated identity information, access to a plurality of resources unrelated to and/or unaffiliated with authorization server 108. In yet some other instances, authorization server 108 and/or resource server 112 may comprise affiliated entities and/or may be implemented on a single server or collection of servers.

Resource server 112 may comprise any one or more computing devices, servers, services, local processes, remote machines, web services, etc. for hosting, managing, and/or providing access to secured resources 116 by users of computing device 102. For instance, resource server 112 may comprise a server located on an organization's premises and/or coupled to an organization's local network, a remotely located server, a cloud-based server (e.g., one or more servers in a distributed manner), or any other device or service that may host, manage, and/or provide access to secured resources 116. Secured resources 116 may include any type of resource coupled to a network, including but not limited to computing or processing resources, software resources (e.g., software as a service (SaaS), platform as a service (PaaS), etc.), storage resources (e.g., physical storage devices, local storage devices, cloud-based storages, hard disk drives, solid state drives, random access memory (RAM) devices, etc.), databases, etc.

For instance, secured resources 116 may include storage devices for storing any data that is confidential, critical, private, secure, and/or not otherwise intended for public dissemination, such as personal information, educational information, health information, professional information, organizational or company information, banking or other financial records, legal documents, biographic information such as birth certificates, driver's licenses, passports, etc. These examples are illustratively only, and secured resources 116 may include any other type of data (including both confidential and non-confidential information) that may be stored in any device whether locally and/or on a cloud-based storage. In some examples, secured resources 116 may be stored in a secure manner, such as via password protection, encryption (e.g., public and private key encryption, symmetric keys, etc.), or any other secure manner as appreciated by those skilled in the relevant arts such that read/write access may be provided only by the owner of the data.

In example embodiments, computing device 102 may comprise a plurality of computing environments, including but not limited to a host computing environment (e.g., an environment on which a primary operating system of computing device 102 is executing), and one or more other computing environments that may be fully or partially isolated from a host computing environment. For instance, such isolated environments may comprise virtual machine 104 and/or applications executed therein. In examples, virtual machine 104 and/or applications executed therein may be restricted by an isolation mechanism (e.g., a container managed by the host operating system, etc.) from accessing resources outside of the isolated environment absent a "hole" provided in the isolation barrier or an authorization token permitting an application executing in the isolated environment to access an external resource (e.g., stored on the host computing environment and/or stored in another device accessible via network 110).

In examples, when an application of virtual machine 104 desires to access a resource outside of virtual machine 104, the application may provide a token request to authorization token manager 106 for an appropriate authorization token. In accordance with implementations, authorization token 106 may be configured to assign a trust level to the token request. The trust level may indicate, for instance, that the virtual machine 104 and/or the application executed therein are not trusted and/or susceptible to being compromised or breached. Authorization token manager 106 may provide the token request and assigned trust level to token issuer 110 to obtain an authorization token. Token issuer 110 may validate identity information (e.g., login credentials) and generate an authorization token that includes a trust indication embedded therein. Token issuer 110 may provide the authorization token that includes the embedded trust indication to authorization token manager 106, which may provide the authorization token to the requesting application executing in virtual machine 104.

When the application attempts to access an external resource, such as secured resources 116, using the authorization token, resource manager 114 may extract the trust indication in the authorization token. Thus, where the trust indication indicates that the authorization token was initiated in an environment that is not trusted (e.g., may be vulnerable to various types of malicious behavior, such as ransomware attacks), resource manager 114 may perform a precautionary action (e.g., creating a backup) to protect secured resources 116 prior to providing access to the application.

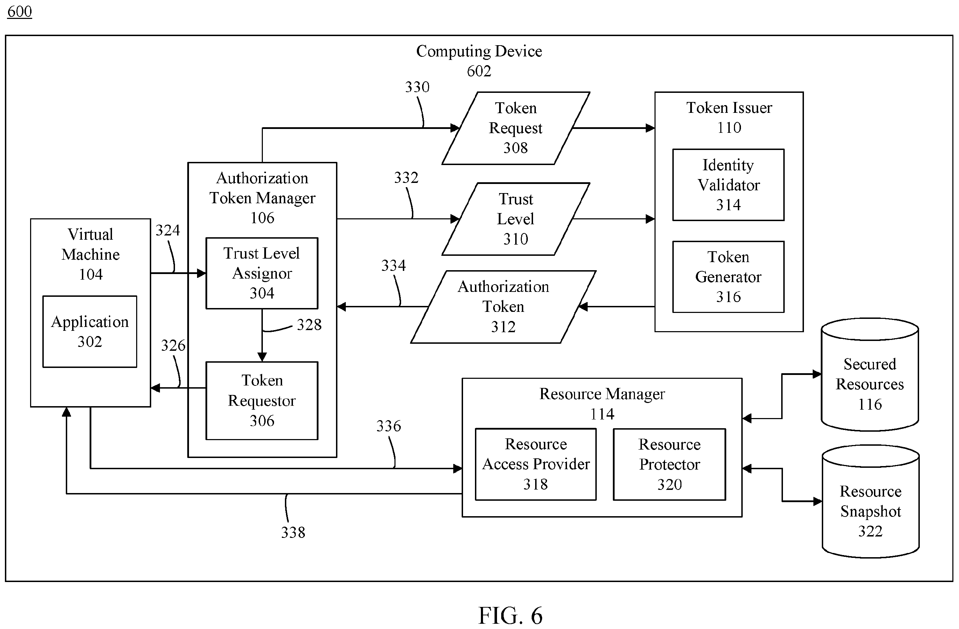

It is noted and understood that implementations are not limited to the illustrative arrangement shown in FIG. 1. Rather, network 110 may comprise any number of computing devices and/or servers (including but not limited to machines and/or virtual machines) coupled in any manner. For instance, though computing device 102 is shown separate from authorization server 108, resource server 112, and secured resources 116, in an embodiment, one or more of computing device 102, authorization server 108, resource server 112, and/or secured resources (or components therein) may be co-located, located remote from each other, may be implemented on a single computing device or virtual machine, or may be implemented on or distributed across one or more additional computing devices or virtual machines not expressly illustrated in FIG. 1. An example of an arrangement in which authorization token manager, token issuer 110, resource manager 114, and secured resources 116 may be implemented in a computing device is illustrated in FIG. 6, described in greater detail below.

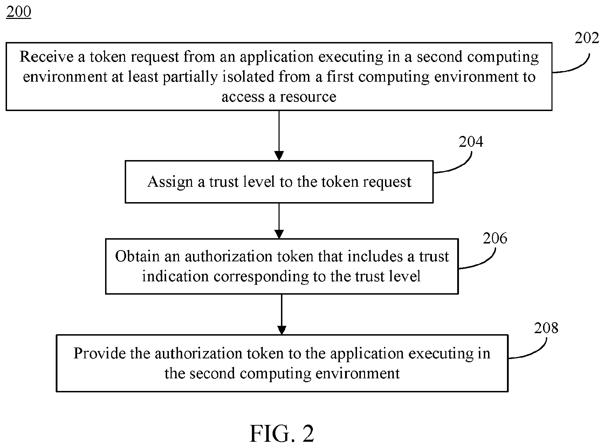

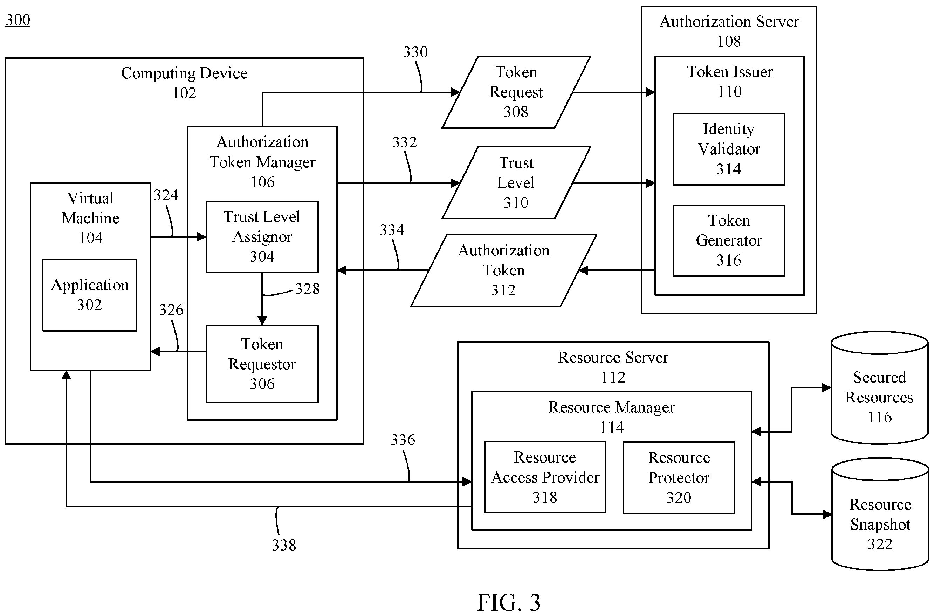

Authorization token manager 106 may operate in various ways to enable access to a resource in a secured manner. For instance, authorization token manager 106 may operate according to FIG. 2. FIG. 2 shows a flowchart 200 of a method for providing an authorization that includes a trust indication to an application, according to an example embodiment. For illustrative purposes, flowchart 200 and authorization token manager 106 are described as follows with respect to FIG. 3.

FIG. 3 shows a block diagram of a system 300 for providing access to a network resource in a secured manner, according to an example embodiment. As shown in FIG. 3, system 300 includes an example implementation of computing device 102, authorization server 108, and resource server 112. Computing device 102 includes virtual machine 104 and authorization token manager 106. Virtual machine 104 may comprise an application 302 executed therein. Authorization token manager 106 may include a trust level assignor 304 and a token requestor 306. Authorization server 108 includes token issuer 110. Token issuer 110 includes an identity validator 314 and a token generator 316. Resource server includes resource manager 114. Resource manager 114 includes a resource access provider 318 and a resource protector 320. Resource manager 114 may be coupled to secured resources 116 and resource snapshot 322. As shown in system 300 of FIG. 3, authorization token manager 106 may transmit a token request 308 and an associated trust level 310 to token issuer 110. Token issuer 110 may generate an authorization token 312 that includes a trust indication that may be embedded therein. Authorization token manager 106 may provide the authorization token to application 302. Subsequently, when application 302 provides the authorization token to resource manager 114 to access secured resources 116, resource manager 114 may be configured to perform a precautionary action to protect secured resources 116 prior to providing access to such resources. Flowchart 200 and system 300 are described in further detail as follows.

Flowchart 200 of FIG. 2 begins with step 202. In step 202, a token request is received from an application executing in a second computing environment at least partially isolated from a first computing environment to access a resource. For instance, with reference to FIG. 3, trust level assignor 304 may be configured to receive a token request 324 from application 302. Virtual machine 104 may comprise a computing environment that is partially or fully isolated from another computing environment (e.g., a host environment in which a primary operating system of computing device 102 may be executing). For example, virtual machine 104 may comprise an operating system (e.g., of the same or different type as the operating system executing in the host environment) and/or one or more applications executed therein. Virtual machine 104 runs on top of the main operating system of computing device 102. Application 302 may comprise any type of application that may execute on virtual machine 104, including but not limited to software packages installed in virtual machine 104 or accessed from a remote compute or server, web applications, web services, or any other code or binary that may be executed on or within virtual machine 104. In example embodiments, virtual machine 104 and/or application 302 may not be trusted (e.g., may be unsecure, susceptible to execution of malicious code, etc.) due to any number of factors, including but not limited to, the types of applications executed by a user of virtual machine 104, remote services or websites accessed by a user that may potentially exploit application 302 and/or virtual machine 104, and/or inherent aspects of virtual machine 104 or application 302 itself (e.g., an operating system executing on virtual machine 104 may be deemed untrusted altogether).

Although it is depicted in FIG. 3 that computing device 102 may comprise a virtual machine and an application executed therein, implementations are not limited to this particular arrangement. For instance, an isolated computing environment on computing device 102 may instead comprise an application executing on computing device 102 (e.g., on the same primary operating system of the host environment), such as an application that is executed in a guest, private, or incognito mode, an arrangement that includes one or fully or partially isolated containers or sandboxed processes or applications, a computing environment of a first central processing unit (CPU) that is separate from a computing environment of a second CPU (on the same or different circuit board or motherboard), or other mode or arrangement in which a complete or partial isolation boundary may be implemented between the executing application and the host computing environment.

In examples, application 302 may, through user interaction or in response to software executing on virtual machine 104, attempt to connect to resources outside of virtual machine 104, such as secured resources 116. For instance, application 302 may attempt to connect to a cloud-based file server that is remote from virtual machine 104 and/or computing device 102. In order to access such secured resources 116, application 302 may need to provide an appropriate authorization token to resource manager 114. In implementations, the token request for such an authorization token generated by application 302 may be redirected such the token request is provided to the host computing environment. For instance, with reference to FIG. 3, the request for an authorization token initiated by application 302 may be redirected to trust level assignor 304 indicating that the application is seeking to access certain resources. Trust level assignor 304 may receive such a request through one or more holes provided in an isolation barrier implemented between virtual machine 104 and the host computing environment of computing device 102.

The authorization request received by trust level assignor 304 from application 302 may include, among other things, an identification of the resources for which access is requested (e.g., an identification of secured resources 116), an identification of the requesting application, login credentials for the appropriate authorizing entity (e.g., an identity provider), the type of access requested (e.g., read only access, read/write access, etc.), a length of time for which the token is requested, and any other information that may be associated with an authorization token request as appreciated by those skilled in the relevant arts.

In step 204, a trust level is assigned to the token request. For instance, with reference to FIG. 3, trust level assignor 304 may be configured to assign a trust level to the token request received by application 302 executing in virtual machine 104. In some examples, as described earlier, virtual machine 104 and/or one or more applications executing therein may be deemed untrusted. In such examples, trust level assignor 304 may assign a trust level that indicates that the entity requesting the token request (e.g., by identifying application 302 and/or virtual machine 104) is not trusted. In some further implementations, trust level assignor 304 may assign a trust level that includes a grade such as an alphanumeric value that may indicate a level of trustworthiness of the token request based on a predetermined scale.

In examples, trust level assignor 304 may assign the trust level in various ways. For instance, trust level assignor 304 may assign the trust level based on predetermined knowledge (e.g., stored in a database or other data structure) regarding characteristics of the isolated computing environment, such as the identity of virtual machine 104, an operating system executing on virtual machine 104, and/or any other applications 302 that may be executing therein. In one illustrative example, trust level assignor 304 may automatically deem that certain types of token requests (or all token request) originating from the isolated environment are not trusted and accordingly assign a reduced trust level to each such token request. In other examples, trust level assignor 304 may assign reduced trust levels to token requests associated with certain applications, operating systems or virtual machines that may be hosted as part of an isolated environment on computing device 102. In yet other examples, trust level assignor 304 may assign trust levels to token requests received from application 302 based on an on-the-fly determination. A trust level may be indicated in any form, including being a numerical value (e.g., in the 0 to 10 range, with "0" meaning no trust, and "10" meaning highest trust), a textual value (e.g., "high," "medium," "low," "none,' etc.), an alphanumeric value, a string, etc.

In step 206, an authorization token that includes a trust indication corresponding to the trust level of the token request is obtained. For instance, with reference to FIG. 3, token requestor 306 may obtain an authorization token 312 that includes a trust indication from token issuer 110. Token requestor 306 may be obtain authorization token 312 in various ways. In the illustrative arrangement shown in FIG. 3, for example, token requestor 306 may be configured to obtain 328 trust level 310 from trust level assignor 304. Token requestor 306 may transmit 332 trust level 310, as well as transmit 330 token request 308 to identity validator 314 of token issuer 110 in accordance with one or more API or network calls. Token request 308 may include information associated with the requested access as described previously, such as login credential, identification of the resource to be accessed, the scope of access requested, etc. Token request 308 may correspond to the token request received by trust level assignor 304 from application 302 (e.g., to access a resource) and the associated trust level. For instance, where trust level assigns a trust level indicating that virtual machine 104 and/or application 302 is not trusted, token requestor 306 may transmit token request 306 and the assigned trust level 310 to the appropriate token issuing service in order to obtain a token that enables access to the requested resource.

In implementations, token request 308 may be transmitted separate from trust level 310 (e.g., in different data packets, sequentially, out of order, etc.). In some other examples, token request 308 and trust level 310 may be transmitted together (e.g., as part of the same data packet or set of data packets). For instance, trust level 310 may be appended to, included in, or otherwise transmitted with, token request 308 as a tag, an identifier, a marking, a flag, a claim, metadata, a new or revised scope associated with the request, etc. Implementations are not limited to these illustrative examples, and may include any other manner of transmitting trust level 310 with token request 308 that may indicate trustworthiness information of the token request (e.g., a trust level of virtual machine 104 and/or application 302) to a token issuer (e.g., token issuer 110).

In examples, token generator 316 may generate authorization token 312 that includes a trust indication indicative of a trust level of the environment in which the token may be used. The trust indication may comprise any suitable format (e.g., numeric, textual, a string, etc.) and may be included within, appended to, merged with, or otherwise associated with authorization token 312. For instance, the trust indication may similarly comprise a tag, an identifier, a marking, a flag, a claim, metadata, a new or revised scope, etc. that is part of, or integral with, authorization token 312. In the example where authorization token 312 is a file, the trust indication may be written into an existing field or as a new entry to the file. By including the trust indication, authorization token 312 is considered "marked." Accordingly, in implementations, authorization token 312 may comprise a marked token that indicates that the requesting entity may not be secure. In examples, token generator 316 may transmit 334 authorization token 312 that includes the trust indication to token requestor 306 (e.g., over a network).

In step 208, the authorization token that includes the trust indication is provided to the application executing in the second computing environment. For instance, with reference to FIG. 3, token requestor 306 may be configured to provide 326 authorization token 312 that includes the trust indication to application 302 executing on virtual machine 104. In implementations, token requestor 306 may pass authorization token 312 to application 302 without modifying the authorization token. Application 302 may then use authorization token 312 to access a resource, such as secured resources 116 (or a resource that may be stored local to computing device 102). In examples, because the trust indication is included as part of authorization token 312, application 302 (or any malicious code that may be executing on virtual machine 104) may not alter the received authorization token. In other words, if the authorization token were altered by any activity occurring in a potentially compromised environment (e.g., virtual machine 104), the altered authorization token would not enable access to the resources of a resource provider, because the altered authorization token could not be verified between the resource provider and the authorization service (e.g., token issuer 110 and resource manager 114, as shown in the example of FIG. 3). As a result, a trust indication may be embedded into an authorization token in a manner that cannot be modified, thereby enhancing the integrity of the authorization token.

As will be described in greater detail below, when application 302 attempts to access a resource by transmitting 336 the received authorization token to the appropriate resource provider, the resource provider may be configured to extract (e.g., read or copy) the trust indication from the authorization token and determined whether a precautionary action should be performed prior to providing access to the resource. For instance, where resource protector 320 extracts a trust indication that indicates that application 302 and/or virtual machine 104 may not be secure, resource protector 320 may be configured to protect secured resources 116 by creating a backup of the requested resources (e.g., by creating resource snapshot 322) in advance of granting access 338 to such resources. An example flowchart depicting the performance of a precautionary action to protect a resource will be described below in greater detail with respect to FIG. 6.

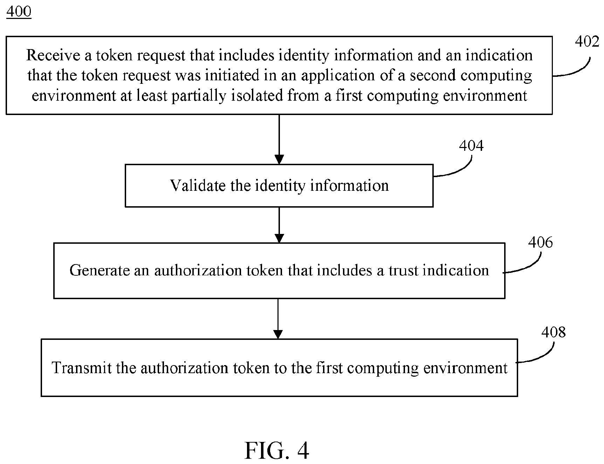

As described above, token issuer 110 may be configured to generate an authorization token that includes a trust indication in various ways. For example, FIG. 4 shows a flowchart 400 of a method for generating an authorization token that includes a trust indication, according to an example embodiment. In an implementation, the method of flowchart 400 may be implemented by identity validator 314 and token generator 316. FIG. 4 is described with continued reference to FIG. 3. Other structural and operational implementations will be apparent to persons skilled in the relevant art(s) based on the following discussion regarding flowchart 400 and system 300 of FIG. 3.

Flowchart 400 begins with step 402. In step 402, a token request that includes identity information and an indication that the token request was initiated in an application of a second computing environment at least partially isolated from a first computing environment is received. For instance, with reference to FIG. 3, identity validator 314 of an authorization server 108 may be configured to receive token request 308 that includes identity information and trust level 310 that indicates an associated trust level. In examples, identity information may include one or more of user login credentials (e.g., a user name and/or password), a user alias, an account number, biometric information, or any other information or credentials that identity validator 314 may validate to determine whether permit access to a resource (e.g., secured resources 116). As described earlier, trust level 310 may include information corresponding to a trust level of the environment in which token request 308 was initiated. For instance, with reference to FIG. 3, trust level 310 may indicate a trust level associated with application 302 that is executing in virtual machine 104. In other examples, trust level 310 may comprise a flag or other indication that indicates that the request was initiated in an environment different than, or executing within, a host computing environment. These examples are illustrative only, and trust level 310 may include any type of information (e.g., a flag, a marking, a claim, metadata, etc.) that indicates that token request 308 may have originated form a potentially untrusted environment.

In step 404, the identity information is validated. For instance, with reference to FIG. 3, identity validator 314 may be configured to validate the identity information received in token request 308 to determine whether to permit the requesting entity to obtain an authorization token allowing access to a requested resource. Identity validator 314 may validate the identity information in various ways as will be appreciated to those skilled in the relevant arts, such as by looking up the identity information in a database (e.g., a user or account database or the like) and making a comparison, providing the identity information to another server or service for validation, etc. For example, if the validation is not success (e.g., incorrect user credentials are received), identity validator 314 may determine that access should not be permitted, and therefore no authorization token will be provided to application 302. Where validation is successful, identity validator 314 may allow token generator 316 to generate an appropriate authorization token that may be provided to application 302 to access the requested resource.

In step 406, an authorization token that includes a trust indication is generated. For instance, with reference to FIG. 3, token generator 316 may be configured to generate authorization token 312 that includes a trust indication indicative of a trust level of the computing environment in which token request 308 was initiated. In examples, the trust indication may be indicative of a trust level associated with virtual machine 104 and/or application 302 executing therein, such as by indicating that the computing environment is not trusted. As described earlier, the trust indication may be embedded in authorization token 312 and may comprise any suitable form, including a tag, a marking, a flag, a claim, etc. that may indicate to a resource provider (e.g., resource server 112) that the authorization token may be used by an application of an untrusted computing environment

In some example implementations, the trust indication may be different for each received token request. For instance, certain types of isolated environments (e.g., certain applications and/or operating systems executing therein known to be unsecure) may be deemed less trustworthy than other applications or operating systems, and therefore the trust indication for such less trustworthy applications or operating systems may be indicative of a further reduced trust level. In other examples, a trust indication may comprise a different type of indication, such as where an application may be deemed only potentially trustworthy (as opposed to being known as being unsecure). In this manner, token generator 316 may mark authorization token 312 with the appropriate trust indication that is indicative of the trust level of the application in the untrusted environment, thereby enabling the resource provider to perform different preventative measures based on the embedded trust indication.

Authorization token 312 may include any type of token that enables a computing entity (e.g., applications, services, etc.) to access a resource. Examples of authorization token 312 include, but are not limited to, web tokens that enable access to web or other network-accessible resources, access tokens, tokens generated in accordance with the Open Authorization (OAuth) standard, Microsoft^{®} Windows NT tokens, etc. Authorization token 312 may be generated for a particular requesting application or for a particular resource, or may comprise a single token that is associated with a plurality of such applications.

In some example embodiments, token generator 316 may also be configured to store each generated authorization token 312 in a suitable storage device (either locally or in one or more cloud-based storages). Accordingly, when application 302 attempts to access a resource by providing authorization token 312 to resource manager 114, resource protector 320 may obtain the authorization token stored at authorization server 108 to determine the authenticity of the token received from application 302 prior to granting access to the requested resource. In other instances, token generator 316 may also be configured to retransmit a previously generated and unexpired token (including the trust indication) to token requestor 306, such as where token generator 316 previously generated an authorization token corresponding for application 302 to access the same resource.

In step 408, the authorization token that includes the trust indication is provided to the application executing in the second computing environment. For instance, with reference to FIG. 3, token generator 316 may be configured to transmit authorization token 312 to token requestor 306 for providing to application 302 (e.g., by passing authorization token 302 thorough an isolation boundary) and/or by providing authorization token 312 directly to application 302 (e.g., without transmitting the token to token requestor 306 as an intermediary). As described above, application 302 may use authorization token 312 to access the requested resource.

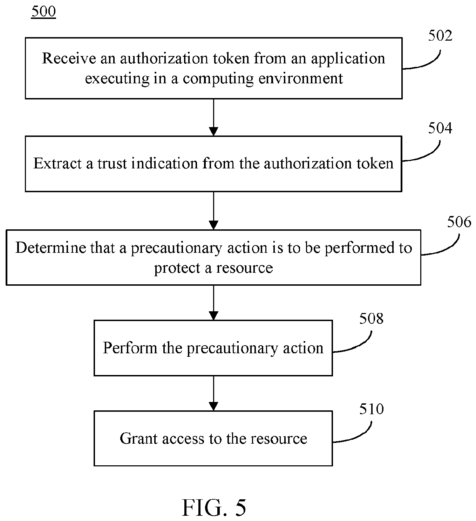

As described herein, resource manager 114 may be configured to protect secured resources 116 in response to receiving an authorization token. For example, FIG. 5 shows a flowchart of a method for performing a precautionary action to protect a resource, according to an example embodiment. In an implementation, the method of flowchart 500 may be implemented by resource access provider 318 and resource protector 320. FIG. 5 is described with continued reference to FIG. 3. Other structural and operational implementations will be apparent to persons skilled in the relevant art(s) based on the following discussion regarding flowchart 500 and system 300 of FIG. 3.

Flowchart 500 begins with step 502. In step 502, an authorization token is received from an application executing in a computing environment. For instance, with reference to FIG. 3, resource protector 320 may be configured to receive authorization token 312 from application 302 executing in virtual machine 104 via network 110. As described herein, authorization token 312 may also include a trust indication that is indicative of a trust level of the environment associated with authorization token 312. In this example, therefore, the trust indication may be indicative of a trust level of the computing environment in virtual machine 104 and/or application 302 may be executing.

It is noted, however, that in some other example embodiments, authorization token 312 may not comprise a trust indication, such as where the token request originated in an environment that is trusted (e.g., from an application executing on a primary operating system of a computing device). For instance, if a trusted application (or an application executing in a trusted environment) requests an authorization token, the generated authorization may not comprise a trust indication for such an application. Thus, in some examples, resource protector 320 may also be configured to determine whether a trust indication is present in a received authorization token.

After application 302 obtains authorization token 312 as described earlier, application 302 may attempt to access resources consistent with the scope of the granted authorization token by interacting with the appropriate resource provider, such as resource server 112. In examples, application 302 may also provide authorization token 312 to resource protector 320 in conjunction with the attempted access of the resource. Resource protector 320 may verify the authenticity of authorization token 312 in a similar manner as previously described, such as by interacting with authorization server 108 to determine whether the authentication token received from application 302 is valid and/or not expired.

In step 504, a trust indication is extracted from the authorization token. For instance, resource protector 320 may be configured to parse authorization token 312 to extract the trust indication therefrom. For instance, where the trust indication is embedded in authorization token 312 as an identifier, a marking, a flag, a claim, metadata, etc., resource protector 320 may extract such indication. In some implementations, resource protector 320 may also obtain the trust indication from authorization server 108 (e.g., when the authenticity of the received token is confirmed).

In step 506, it is determined that a precautionary action is to be performed to protect a resource. For instance, with reference to FIG. 3, resource protector 320 may be configured to determine, in response to receiving the authorization token and extracting the trust indication, that a precautionary action is to be performed to protect a resource. For example, where the trust indication indicates that the environment from which authorization token 312 was received is not trustworthy, resource protector 320 may determine that one or more precautionary actions are to be performed to protect secured resources 116. Precautionary actions may include any type of action performed to prevent (e.g., preemptively) or mitigate potentially malicious alterations to secured resources 116.

For example, where the extracted trust indication indicates that the computing environment from which authorization token 312 was received is not trustworthy, resource protector 320 may be configured to carry out certain actions to prevent a user's data from being damaged, compromised, and/or breached. In some examples, resource protector 320 may determine that a plurality of precautionary actions are to be performed. In some other instances, resource protector 320 may determine that a precautionary action need not be performed, such as where the authentication token was received from a computing environment known to be trusted by resource server 112. In yet some other instances, resource protector 320 may also determine not to perform a precautionary actions, such as where resource protector 320 deems that application 302 is not malicious based on a previous access provided to application 302 in response to receiving the same authorization token.

In step 508, the precautionary action is performed to protect the resource in response to receiving the authorization token. For instance, with reference to FIG. 3, resource protector 320 may be configured to perform one or more precautionary actions to protect secured resources 116 in response to receiving authorization token 312 from application 302. In examples, the type (or types) of precautionary actions performed to protect secured resources 116 may be based on a combination of factors, including the type of resource that is being accessed, the scope of the access (e.g., read-only access, altering the resource, etc.), and/or a trust level that may be indicated by the trust indication in authorization token 312. For instance, if the accessed resource has been identified as sensitive and/or important, resource protector 320 may be configured to carry out one or more security measures to protect the resource. In another example, if the extracted trust indication indicates that the computing environment (e.g., application 302) from which authorization token 312 was received is known to be untrusted, resource protector 320 may perform one or more heightened security measures to protect secured resources 116.

In one example, resource protector 320 may be configured to automatically create resource snapshot 322 in response to receiving authorization token 312 that indicates that application 302 is not to be trusted. Resource snapshot 322 may comprise, for instance, a backup copy of secured resources 116 that is inaccessible to application 302, even with authorization token 312. In some implementations, resource protector 320 may generate resource snapshot 322 of secured resources 116 in various ways, including by creating a snapshot consistent with the entire scope of access of authorization token 312 (e.g., copying all of a user's files if authorization token 312 is expansive), and/or copying resources on a file-by-file basis (e.g., copying only the individual files that application 302 attempts to access).

While resource snapshot 322 may be stored local to secured resources 116 in some examples, it is contemplated that resource snapshot 322 may also be stored remotely (e.g., on another server) in a manner that is not accessible to application 302 and/or any other potentially untrusted application. In some implementations, resource protector 320 may be configured to encrypt (or further encrypt) resource snapshot 322 to further enhance security by preventing unauthorized access in the event of a potential compromise.

Creation of a backup copy of secured resources 116 is only one illustrative example of a precautionary measure that resource protector 320 may perform to protect a resource. Resource protector 320 may also perform one or more other measures in addition to, or as an alternative to, creating resource snapshot 322, including but not limited to authorizing a scope of access that is more limited than the scope indicated in authorization token 312 (e.g., a read-only access of accessed files on a storage device, preventing withdrawals from a financial institution, etc.), permitting access only for a certain time period (e.g., in days, hours, minutes, seconds, etc.) after which access may be terminated, denying access entirely (e.g., where the secured resources may be deemed too sensitive or important, such as bank or financial information, to allow any potentially untrusted access), and/or requiring one or more additional or alternative authorization procedures.

In some other instances, resource protector 320 may perform an enhanced identity authentication in response to receiving an authorization token that includes a trust indication. For example, resource protector 320 may require, prior to granting access to secured resources 116, that a user of computing device 102 perform an additional authentication procedure or re-execute the same authentication procedure from a trusted environment (e.g., from an application executing within a trusted primary operating system), perform a multi-factor procedure (e.g., confirming a randomly-generated code that is transmitted to a mobile device, e-mail account, etc.) to confirm that authentication token 312 was initiated by a legitimate application prior to granting access to the resource.

In some further implementations, resource protector 320 may also be configured to detect abnormal activity via authentication tokens described herein. For instance, if resource protector 320 is receiving an abnormal number of access requests associated with a particular authorization token 312 (e.g., a number of access requests above a threshold value or in a certain time period) from application 302, resource protector 320 may infer that application 302 is engaging in potentially malicious activity or otherwise may be compromised. In such an instance, resource protector 320 may determine, as an additional precautionary measure, to cease servicing accessing requests from application 302 as an additional precautionary measure.

In some other instances, resource protector 320 may also perform a preventative action on one or more resources unrelated to authorization token 312. For instance, if resource protector 320 receives a request from a potentially untrustworthy computing environment, resource protector 320 may be configured to automatically protect (e.g., by encrypting, locking down, moving to a more secure location, etc.) unrelated files that may comprise a heightened sensitivity or importance to further enhance security. In this manner, even if certain malicious code may compromise secured resources 116, movement of the malicious code may still be limited because resource protector 320 may prevent the code from accessing not only resource snapshot 322, but also other data that may be present on or accessible by the same server.

In step 510, access to the resource is granted by the application executing in the computing environment. For instance, with reference to FIG. 3, resource access provider 318 may be configured to grant access to secured resources 116 by application 302 executing in the computing environment (i.e., the potentially untrusted environment). In some examples, the type of access granted by resource access provider 318 may be based on the precautionary action(s) performed to protect secured resources 116. For instance, if resource protector 320 created resource snapshot 322 that is inaccessible by application 302, resource access provider 318 may be permitted full read/write access to secured resources 116.

In other examples, if a backup copy is not created, resource access provider 318 may grant application 302 a more limited access, such as a read-only access, to prevent secured resources 116 from being affected by a potentially malicious activity. For instance, resource access provider 318 may be configured to grant application 302 access, based on the trust indication included in the token, to open existing content in a user's file space and/or generate new content for storage in a user's file space, while preventing application 302 from modifying or deleting existing content. In some other implementations, resource access provider 318 may also be configured to implement markings or tags for any new content generated by application 302 such that the application may not only generate new content (each item of content being identified by a marking or tag), but modify or delete the newly generated content based on the marked items of content. In a further implementation, such a marking or tag may be automatically cleared, e.g., after a passage of a predetermined time period or when a full-access authorization token (e.g., a token granted to an application executing in a trusted environment) accesses the marked content.

Resource access provider 318 may also be configured to permit application 302 to access resource snapshot 322 (instead of secured resources 116, which may be kept protected from application 302). In either instance, resource protector 320 may be configured to automatically delete the backup copy upon a determination that the access by application 302 was not malicious and/or upon a predetermined passage of time. In other instances, such as where resource protector 320 may be notified that application 302 maliciously altered secured resources 116 (e.g., due to ransomware or the like), resource protector 320 may be configured to restore secured resources 116 from resource snapshot 322. As a result, even an untrusted application attempts to inject ransomware to encrypt or otherwise alter a user's files, the backup of the files may be easily restored, thereby minimizing the harm of such malicious behavior.

It is noted and understood that the arrangement described in FIG. 3 is illustrative only, and implementations may include various other types of arrangements, including arrangements in which one or more of authorization token manager 106, token issuer 110, resource manager 114, secured resources 116, and resource snapshot 322 may be implemented local to computing device 102. For example, FIG. 6 shows a block diagram of a system 600 for providing access to a local resource in a secured manner, according to an example embodiment. System 600 comprises computing device 602. Similar to computing device 102, computing device 602 may include a plurality of computing environments. For instance, computing device 602 may comprise a computing environment in which a primary operating system including desktop and/or mobile operating systems (e.g., Microsoft^{®} Windows, Apple^{®} macOS, Apple^{®} iOS, Google^{®} Android) may be executing. Computing device 602 may also include one or more other computing environments as described herein, such as an isolated environment that may include virtual machine 104 and applications executing therein (e.g., application 302).

In the example arrangement of FIG. 6, a first computing environment (e.g., a computing environment that may host an isolated environment) may include one or more of authorization token manager 106, token issuer 110, resource manager 114, secured resources 116, and resource snapshot 322. For instance, instead of one or more of such components being implemented on one or more network entities, such components may be implemental local to computing device 602. For example, token requestor 306 may provide a token request (e.g., a request for an NT token or the like) to identity validator 314 that is configured to manage authorization tokens for local activities on computing device 602. In some example implementations, identity validator 314 and/or token generator 316 may be implemented as part of the primary operating system of computing device 602, a file system manager, and/or as any other application executing thereon, such that access to locally stored data (or remotely stored data that may be accessible via a local interaction, such as via a shortcut or the like) may be managed through local authorization tokens. In other words, token generator 316 may be configured to generate and provide authorization tokens that permit applications executing on computing device 602 (including any applications that may be hosted in isolated environments) to access local resources such as secured resources 116.

Accordingly, when application 302 requests a token and token requestor 306 provides token request 308 and assigned trust level 310 to token issuer 110, token generator 316 may generate an authorization token that includes a trust indication indicative of trust level 310 in a similar manner as described previously. The authorization token may include, for instance, information associated with the authorized access, such as user information (e.g., identification of the user as an administrator, a guest, etc.), a permission level (e.g., read-only, read/write access, etc.), identification of the requested resources, etc. Token requestor 306 may provide the authorization token that includes the trust indication (e.g., a marked authorization token) to application 302, permitting the application to access local resources that may be available outside of virtual machine 104.

Accordingly, when application 302 attempts to access or alter a resource outside of the isolated computing environment, such as secured resources 116, the resource access provider 318 may extract the trust indication from the authorization token provided by application 302 and determine application 302 may not be trusted. In response to receiving such a marked authorization request indicating that application 302 may not be trusted, resource protector 320 may perform one or more precautionary actions in the computing environment comprising the primary operating system to protect secured resources 116, such as creating resource snapshot 322 that comprises a backup copy of secured resources 116 prior to allowing access to secured resources 116. As described earlier, resource protector 320 may also comprise any other types of precautionary actions in addition to or as alternative to creating resource snapshot 322, including but not limited to allowing a limited access (e.g., a read-only access) to secured resources 116, preventing secured resources 116 from being encrypted (or further encrypted), requiring an enhanced authorization, or any other precautionary action as will be appreciated by those skilled in the art.

It is noted and understood that isolated environments need not include virtual machine 104 as described with respect to FIGS. 3 and 6. For instance, application 302 may also comprise any type of application (e.g., a web browser) executing on the host computing environment that may include a partial or complete isolation boundary. Thus, even where the isolated environment comprises another application that may access resources stored either locally or remotely, implementations may still enable such resources to be accessed in a more secure manner (e.g., by creating a backup copy, restricting access, etc.) by marking authorization tokens that are used to for such access with trust information of the accessing environment as described herein.

### III. Example Mobile and Stationary Device Embodiments

Computing device 102, virtual machine 104, authorization token manager 106, authorization server 108, token issuer 110, resource server 112, resource manager 114, secured resources 116, trust level assignor 304, token requestor 306, identity validator 314, token generator 316, resource access provider 318, resource protector 320, resource snapshot 322, flowchart 200, flowchart 400, and/or flowchart 500 may be implemented in hardware, or hardware combined with software and/or firmware, such as being implemented as computer program code/instructions stored in a physical/hardware-based computer readable storage medium and configured to be executed in one or more processors, or being implemented as hardware logic/electrical circuitry (e.g., electrical circuits comprised of transistors, logic gates, operational amplifiers, one or more application specific integrated circuits (ASICs), one or more field programmable gate arrays (FPGAs)). For example, one or more of computing device 102, virtual machine 104, authorization token manager 106, authorization server 108, token issuer 110, resource server 112, resource manager 114, secured resources 116, trust level assignor 304, token requestor 306, identity validator 314, token generator 316, resource access provider 318, resource protector 320, resource snapshot 322, flowchart 200, flowchart 400, and/or flowchart 500 may be implemented separately or together in a SoC. The SoC may include an integrated circuit chip that includes one or more of a processor (e.g., a central processing unit (CPU), microcontroller, microprocessor, digital signal processor (DSP), etc.), memory, one or more communication interfaces, and/or further circuits, and may optionally execute received program code and/or include embedded firmware to perform functions.

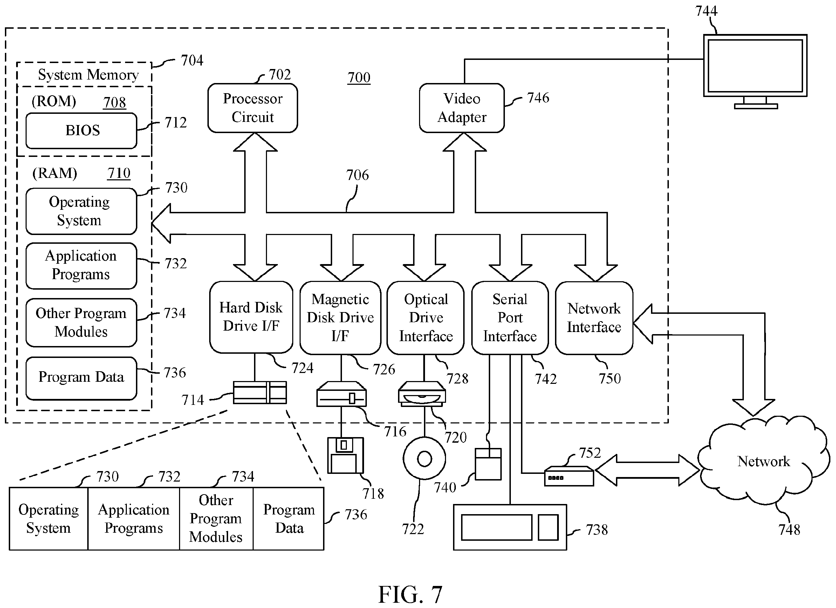

FIG. 7 depicts an exemplary implementation of a computing device 700 in which example embodiments may be implemented. For example, any of computing device 102, virtual machine 104, authorization token manager 106, authorization server 108, token issuer 110, resource server 112, resource manager 114, secured resources 116, trust level assignor 304, token requestor 306, identity validator 314, token generator 316, resource access provider 318, resource protector 320, and/or resource snapshot 322 may be implemented in one or more computing devices similar to computing device 700 in stationary or mobile computer embodiments, including one or more features of computing device 700 and/or alternative features. The description of computing device 700 provided herein is provided for purposes of illustration, and is not intended to be limiting. Example embodiments may be implemented in further types of computer systems, as would be known to persons skilled in the relevant art(s).

As shown in FIG. 7, computing device 700 includes one or more processors, referred to as processor circuit 702, a system memory 704, and a bus 706 that couples various system components including system memory 704 to processor circuit 702. Processor circuit 702 is an electrical and/or optical circuit implemented in one or more physical hardware electrical circuit device elements and/or integrated circuit devices (semiconductor material chips or dies) as a central processing unit (CPU), a microcontroller, a microprocessor, and/or other physical hardware processor circuit. Processor circuit 702 may execute program code stored in a computer readable medium, such as program code of operating system 730, application programs 732, other programs 734, etc. Bus 706 represents one or more of any of several types of bus structures, including a memory bus or memory controller, a peripheral bus, an accelerated graphics port, and a processor or local bus using any of a variety of bus architectures. System memory 704 includes read only memory (ROM) 708 and random-access memory (RAM) 710. A basic input/output system 712 (BIOS) is stored in ROM 708.

Computing device 700 also has one or more of the following drives: a hard disk drive 714 for reading from and writing to a hard disk, a magnetic disk drive 716 for reading from or writing to a removable magnetic disk 718, and an optical disk drive 720 for reading from or writing to a removable optical disk 722 such as a CD ROM, DVD ROM, or other optical media. Hard disk drive 714, magnetic disk drive 716, and optical disk drive 720 are connected to bus 706 by a hard disk drive interface 724, a magnetic disk drive interface 726, and an optical drive interface 728, respectively. The drives and their associated computer-readable media provide nonvolatile storage of computer-readable instructions, data structures, program modules and other data for the computer. Although a hard disk, a removable magnetic disk and a removable optical disk are described, other types of hardware-based computer-readable storage media can be used to store data, such as flash memory cards, digital video disks, RAMs, ROMs, and other hardware storage media.

A number of program modules may be stored on the hard disk, magnetic disk, optical disk, ROM, or RAM. These programs include operating system 730, one or more application programs 732, other programs 734, and program data 736. Application programs 732 or other programs 734 may include, for example, computer program logic (e.g., computer program code or instructions) for implementing computing device 102, virtual machine 104, authorization token manager 106, authorization server 108, token issuer 110, resource server 112, resource manager 114, secured resources 116, trust level assignor 304, token requestor 306, identity validator 314, token generator 316, resource access provider 318, resource protector 320, resource snapshot 322, flowchart 200, flowchart 400, and/or flowchart 500 (including any suitable step of flowcharts 200, 400, or 500) and/or further example embodiments described herein.

A user may enter commands and information into the computing device 700 through input devices such as keyboard 738 and pointing device 740. Other input devices (not shown) may include a microphone, j oy stick, game pad, satellite dish, scanner, a touch screen and/or touch pad, a voice recognition system to receive voice input, a gesture recognition system to receive gesture input, or the like. These and other input devices are often connected to processor circuit 702 through a serial port interface 742 that is coupled to bus 706, but may be connected by other interfaces, such as a parallel port, game port, or a universal serial bus (USB).

A display screen 744 is also connected to bus 706 via an interface, such as a video adapter 746. Display screen 744 may be external to, or incorporated in computing device 700. Display screen 744 may display information, as well as being a user interface for receiving user commands and/or other information (e.g., by touch, finger gestures, virtual keyboard, etc.). In addition to display screen 744, computing device 700 may include other peripheral output devices (not shown) such as speakers and printers.

Computing device 700 is connected to a network 748 (e.g., the Internet) through an adaptor or network interface 750, a modem 752, or other means for establishing communications over the network. Modem 752, which may be internal or external, may be connected to bus 706 via serial port interface 742, as shown in FIG. 7, or may be connected to bus 706 using another interface type, including a parallel interface.

As used herein, the terms "computer program medium," "computer-readable medium," and "computer-readable storage medium" are used to refer to physical hardware media such as the hard disk associated with hard disk drive 714, removable magnetic disk 718, removable optical disk 722, other physical hardware media such as RAMs, ROMs, flash memory cards, digital video disks, zip disks, MEMs, nanotechnology-based storage devices, and further types of physical/tangible hardware storage media. Such computer-readable storage media are distinguished from and non-overlapping with communication media (do not include communication media). Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared and other wireless media, as well as wired media. Example embodiments are also directed to such communication media that are separate and non-overlapping with embodiments directed to computer-readable storage media.

As noted above, computer programs and modules (including application programs 732 and other programs 734) may be stored on the hard disk, magnetic disk, optical disk, ROM, RAM, or other hardware storage medium. Such computer programs may also be received via network interface 750, serial port interface 742, or any other interface type. Such computer programs, when executed or loaded by an application, enable computing device 700 to implement features of example embodiments described herein. Accordingly, such computer programs represent controllers of the computing device 700.

Example embodiments are also directed to computer program products comprising computer code or instructions stored on any computer-readable medium. Such computer program products include hard disk drives, optical disk drives, memory device packages, portable memory sticks, memory cards, and other types of physical storage hardware.

### IV. Example Embodiments

A system in a computing device for providing an authorization token with a trust indication is described herein. The system includes: one or more processors; and one or more memory devices that store program code configured to be executed by the one or more processors, the program code comprising: an identity validator configured to: receive a token request, from an authorization token manager of a first computing environment, that includes identity information and an indication that the token request was initiated in an application executing in a second computing environment at least partially isolated from the first computing environment; and validate the identity information; and a token generator configured to: generate an authorization token that includes a trust indication indicative of a trust level of the second computing environment; and transmit the authorization token that includes the trust indication to the first computing environment.

In one implementation of the foregoing system, the trust indication comprises an indication that the application executing in the second computing environment is not trusted.

In another implementation of the foregoing system, the second computing environment comprises a virtual machine hosted in the first computing environment.

In another implementation of the foregoing system, the authorization token is configured to permit the application executing in the second computing environment to access a secured resource in the first computing environment.

In another implementation of the foregoing system, the authorization token is configured to permit the application executing in the second computing environment to access a secured resource over a network.

In another implementation of the foregoing system, the access of the secured resource by the application executing in the second computing environment comprises a read-only access of the secured resource.

A method for enabling access to a resource in a secured manner is disclosed herein. The method includes: receiving a token request from an application executing in a second computing environment at least partially isolated from a first computing environment to access a resource; assigning a trust level to the token request; obtaining an authorization token that includes a trust indication, the trust indication corresponding to the trust level of the token request; and providing the authorization token that includes the trust indication to the application executing in the second computing environment.

In one implementation of the foregoing method, the obtaining the authorization token comprises: transmitting the token request and the assigned trust level to a token issuer; and receiving the authorization token that includes the trust indication corresponding to the trust level from the token issuer.

In another implementation of the foregoing method, the trust indication comprises an indication that the application executing in the second computing environment is not trusted.

In another implementation of the foregoing method, the resource is stored in the first computing environment; and the method further comprises: receiving the authorization token from the application executing in the second computing environment; and performing a precautionary action in the first computing environment to protect the resource in response to receiving the authorization token.

In another implementation of the foregoing method, the precautionary action includes creation of a backup of the resource in response to receiving the authorization token.

In another implementation of the foregoing method, the method further comprises: granting a read-only access to the resource by the first computing environment in response to receiving the authorization token.

In another implementation of the foregoing method, the resource is stored in a server that is configured to perform a precautionary action in response to: receiving the authorization token; extracting the trust indication from the authorization token; and determining the precautionary action is to be performed based on the extracted trust indication.

In another implementation of the foregoing method, the second computing environment comprises a virtual machine hosted in the first computing environment.

A system for granting access to a resource is described herein. The system includes: one or more processors; and one or more memory devices that store program code configured to be executed by the one or more processors, the program code comprising: a resource protector configured to: receive, from an application executing in a computing environment, an authorization token to access a resource, the authorization token including a trust indication indicative of a trust level of the application; perform a precautionary action to protect the resource in response to receiving the authorization token including the trust indication; and a resource access provider configured to grant access to the resource by the application executing in the computing environment.

In one implementation of the foregoing system, the trust indication comprises an indication that the application executing in the computing environment is not trusted.

In another implementation of the foregoing system, the computing environment comprises a virtual machine hosted in another computing environment.

In another implementation of the foregoing system, the precautionary action performed by the resource protector includes: creation of a backup of the resource in response to receiving the authorization token.

In another implementation of the foregoing system, the resource access provider is configured to grant a limited access to the resource by the application executing in the computing environment in response to receiving the authorization token.

In another implementation of the foregoing system, the resource protector is configured to perform an enhanced identity authentication in response to receiving the authorization token; and the resource access provider is configured to grant the access to the resource in response to performing the enhanced identity authentication.

### V. Conclusion

While various embodiments of the present invention have been described above, it should be understood that they have been presented by way of example only, and not limitation. It will be understood by those skilled in the relevant art(s) that various changes in form and details may be made therein without departing from the scope of the invention as defined in the appended claims. Accordingly, the breadth and scope of the present invention should not be limited by any of the above-described exemplary embodiments, but should be defined only in accordance with the following claims.

## Claims

1. A system in a computing device for providing an authorization token with a trust indication, the system comprising:
one or more processors; and
one or more memory devices that store program code configured to be executed by the one or more processors, the program code comprising:
an identity validator (314) configured to:
receive (402) a token request (308), from an authorization token manager (106) of a first computing environment (102), that includes identity information and an indication that the token request was initiated in an application executing in a second computing environment (104) at least partially isolated from the first computing environment; and
validate (404) the identity information; and
a token generator (316) configured to:
generate (406) an authorization token that includes a trust indication indicative of a trust level (310) of the second computing environment; and
transmit (408) the authorization token that includes the trust indication to the first computing environment.

2. The system of claim 1, wherein the trust indication comprises an indication that the application executing in the second computing environment is not trusted.

3. The system of claim 1, wherein the second computing environment comprises a virtual machine (104) hosted in the first computing environment (102).

4. The system of claim 1, wherein the authorization token is configured to permit the application executing in the second computing environment (104) to access a secured resource (116) in the first computing environment (102).

5. The system of claim 1, wherein the authorization token is configured to permit the application executing in the second computing environment (104) to access a secured resource (116) over a network.

6. The system of claim 4, wherein the access of the secured resource (116) by the application executing in the second computing environment (104) comprises a read-only access of the secured resource.

7. A computer-implemented method for enabling access to a resource (116) in a secured manner, the method comprising:
receiving (202) a token request (308) from an application executing in a second computing environment (104) at least partially isolated from a first computing environment (102) to access a resource;
assigning (204) a trust level (310) to the token request;
obtaining (206) an authorization token that includes a trust indication, the trust indication corresponding to the trust level (310) of the token request; and
providing (208) the authorization token that includes the trust indication to the application executing in the second computing environment (104).

8. The method of claim 7, wherein said obtaining (206) the authorization token comprises:
transmitting the token request and the assigned trust level (310) to a token issuer; and
receiving the authorization token that includes the trust indication corresponding to the trust level from the token issuer.

9. The method of claim 7, wherein the trust indication comprises an indication that the application executing in the second computing environment (104) is not trusted.

10. The method of claim 7, wherein the resource is stored in the first computing environment (102); and
wherein the method further comprises:
receiving the authorization token from the application executing in the second computing environment (104); and
performing a precautionary action in the first computing environment (102) to protect the resource (116) in response to receiving the authorization token.

11. The method of claim 10, wherein the precautionary action includes creation of a backup of the resource (116) in response to receiving the authorization token.

12. The method of claim 10, further comprising:
granting a read-only access to the resource (116) by the first computing environment (102) in response to receiving the authorization token.

13. The method of claim 7, wherein the resource is stored in a server (112) that is configured to perform a precautionary action in response to:
receiving the authorization token;
extracting the trust indication from the authorization token; and
determining the precautionary action is to be performed based on the extracted trust indication.

14. The method of claim 7, wherein the second computing environment comprises a virtual machine (104) hosted in the first computing environment (102).

15. A computer-readable storage medium having program instructions recorded thereon, comprising:
computer program logic for enabling a processor to perform the method of any of claims 7-14.

## Patentansprüche

1. System in einer Rechenvorrichtung zum Bereitstellen eines Autorisierungs-Tokens mit einer Vertrauensanzeige, das System umfassend:
einen oder mehrere Prozessoren; und
eine oder mehrere Speichervorrichtungen, die Programmcode speichern, der so konfiguriert ist, dass er von dem einen oder den mehreren Prozessoren ausgeführt werden kann, wobei der Programmcode umfasst:
einen Identitätsvalidierer (314), der konfiguriert ist zum:
Empfangen (402) einer Token-Anforderung (308) von einem Autorisierungs-Token-Manager (106) einer ersten Computerumgebung (102), die Identitätsinformationen und eine Anzeige enthält, dass die Token-Anforderung in einer Anwendung initiiert wurde, die in einer zweiten Computerumgebung (104) ausgeführt wird, die zumindest teilweise von der ersten Computerumgebung isoliert ist; und
Validieren (404) der Identitätsinformationen; und
einen Token-Generator (316), der konfiguriert ist zum:
Generieren (406) eines Autorisierungs-Tokens, das eine Vertrauensanzeige einschließt, die eine Vertrauensebene (310) der zweiten Computerumgebung anzeigt; und
Übertragen (408) des Autorisierungs-Tokens, das die Vertrauensanzeige einschließt, an die erste Computerumgebung.

2. System nach Anspruch 1, wobei die Vertrauensanzeige eine Anzeige umfasst, dass die in der zweiten Computerumgebung ausgeführte Anwendung nicht vertrauenswürdig ist.

3. System nach Anspruch 1, wobei die zweite Computerumgebung eine virtuelle Maschine (104) umfasst, die in der ersten Computerumgebung (102) gehostet wird.

4. System nach Anspruch 1, wobei das Autorisierungs-Token so konfiguriert ist, dass es der Anwendung, die in der zweiten Computerumgebung (104) ausgeführt wird, den Zugriff auf eine gesicherte Ressource (116) in der ersten Computerumgebung (102) erlaubt.

5. System nach Anspruch 1, wobei das Autorisierungs-Token so konfiguriert ist, dass es der Anwendung, die in der zweiten Computerumgebung (104) ausgeführt wird, erlaubt, über ein Netzwerk auf eine gesicherte Ressource (116) zuzugreifen.

6. System nach Anspruch 4, wobei der Zugriff auf die gesicherte Ressource (116) durch die Anwendung, die in der zweiten Computerumgebung (104) ausgeführt wird, einen Nur-Lese-Zugriff auf die gesicherte Ressource umfasst.

7. Computer-implementiertes Verfahren zum Ermöglichen eines Zugriffs auf eine Ressource (116) in einer gesicherten Weise, wobei das Verfahren umfasst:
Empfangen (202) einer Token-Anforderung (308) von einer Anwendung, die in einer zweiten Computerumgebung (104) ausgeführt wird, die zumindest teilweise von einer ersten Computerumgebung (102) isoliert ist, um auf eine Ressource zuzugreifen;
Zuweisen (204) einer Vertrauensebene (310) zu der Token-Anforderung;
Erhalten (206) eines Autorisierungs-Tokens, das eine Vertrauensanzeige einschließt, wobei die Vertrauensanzeige der Vertrauensebene (310) der Token-Anforderung entspricht; und
Bereitstellen (208) des Autorisierungs-Tokens, das die Vertrauensanzeige einschließt, für die Anwendung, die in der zweiten Computerumgebung (104) ausgeführt wird.

8. Verfahren nach Anspruch 7, wobei das Erhalten (206) des Autorisierungs-Tokens umfasst:
Übertragen der Token-Anforderung und der zugewiesenen Vertrauensebene (310) an einen Token-Aussteller; und
Empfangen des Autorisierungs-Tokens, das die der Vertrauensebene entsprechende Vertrauensanzeige von dem Token-Aussteller einschließt.

9. Verfahren nach Anspruch 7, wobei die Vertrauensanzeige eine Anzeige umfasst, dass die in der zweiten Computerumgebung (104) ausgeführte Anwendung nicht vertrauenswürdig ist.

10. Verfahren nach Anspruch 7, wobei die Ressource in der ersten Computerumgebung (102) gespeichert ist; und
wobei das Verfahren weiter umfasst:
Empfangen des Autorisierungs-Tokens von der Anwendung, die in der zweiten Computerumgebung (104) ausgeführt wird; und
Ausführen einer Vorsichtsmaßnahme in der ersten Computerumgebung (102) zum Schutz der Ressource (116) als Reaktion auf den Empfang des Autorisierungs-Tokens.

11. Verfahren nach Anspruch 10, wobei die Vorsichtsmaßnahme die Erstellung eines Backups der Ressource (116) als Reaktion auf den Empfang des Autorisierungs-Tokens einschließt.

12. Verfahren nach Anspruch 10, weiter umfassend:
Gewährung eines Nur-Lese-Zugriffs auf die Ressource (116) durch die erste Computerumgebung (102) in Reaktion auf den Empfang des Autorisierungs-Tokens.

13. Verfahren nach Anspruch 7, wobei die Ressource in einem Server (112) gespeichert ist, der so konfiguriert ist, dass er eine Vorsichtsmaßnahme durchführt als Reaktion auf:
Empfangen des Autorisierungs-Tokens;
Extrahieren der Vertrauensanzeige aus dem Autorisierungs-Token; und
Bestimmen, dass die Vorsichtsmaßnahme auf der Grundlage der extrahierten Vertrauensanzeige durchgeführt werden soll.

14. Verfahren nach Anspruch 7, wobei die zweite Computerumgebung eine virtuelle Maschine (104) umfasst, die in der ersten Computerumgebung (102) gehostet wird.

15. Computerlesbares Speichermedium, aufweisend darauf aufgezeichnete Programmanweisungen, umfassend:
Computerprogrammlogik, die es einem Prozessor ermöglicht, das Verfahren nach einem der Ansprüche 7-14 durchzuführen.

## Revendications

1. Système dans un dispositif de calcul pour fournir un jeton d'autorisation avec une indication de confiance, le système comprenant :
un ou plusieurs processeurs ; et
un ou plusieurs dispositifs de mémoire qui stockent un code de programme configuré pour être exécuté par les un ou plusieurs processeurs, le code de programme comprenant :
un dispositif de validation d'identité (314) configuré pour :
recevoir (402) une demande de jeton (308), en provenance d'un gestionnaire de jeton d'autorisation (106) d'un premier environnement informatique (102), qui inclut des informations d'identité et une indication que la demande de jeton a été initiée dans une application s'exécutant dans un second environnement informatique (104) au moins partiellement isolé du premier environnement informatique ; et
valider (404) les informations d'identité ; et
un générateur de jeton (316) configuré pour :
générer (406) un jeton d'autorisation qui inclut une indication de confiance indiquant un niveau de confiance (310) du second environnement informatique ; et
transmettre (408) le jeton d'autorisation qui inclut l'indication de confiance au premier environnement informatique.

2. Système selon la revendication 1, dans lequel l'indication de confiance comprend une indication que l'application s'exécutant dans le second environnement informatique n'est pas fiable.

3. Système selon la revendication 1, dans lequel le second environnement informatique comprend une machine virtuelle (104) hébergée dans le premier environnement informatique (102).

4. Système selon la revendication 1, dans lequel le jeton d'autorisation est configuré pour permettre à l'application s'exécutant dans le second environnement informatique (104) d'avoir accès à une ressource sécurisée (116) dans le premier environnement informatique (102).

5. Système selon la revendication 1, dans lequel le jeton d'autorisation est configuré pour permettre à l'application s'exécutant dans le second environnement informatique (104) d'avoir accès à une ressource sécurisée (116) sur un réseau.

6. Système selon la revendication 4, dans lequel l'accès de la ressource sécurisée (116) par l'application s'exécutant dans le second environnement informatique (104) comprend un accès en lecture seule de la ressource sécurisée.

7. Procédé mis en oeuvre par ordinateur pour permettre un accès à une ressource (116) de manière sécurisée, le procédé comprenant :
la réception (202) d'une demande de jeton (308) en provenance d'une application s'exécutant dans un second environnement informatique (104) au moins partiellement isolé d'un premier environnement informatique (102) pour avoir accès à une ressource ;
l'attribution (204) d'un niveau de confiance (310) à la demande de jeton ;
l'obtention (206) d'un jeton de confiance qui inclut une indication de confiance, l'indication de confiance correspondant au niveau de confiance (310) de la demande de jeton ; et
la fourniture (208) du jeton d'autorisation qui inclut l'indication de confiance à l'application s'exécutant dans le second environnement informatique (104).

8. Procédé selon la revendication 7, dans lequel ladite obtention (206) du jeton de confiance comprend :
la transmission de la demande de jeton et du niveau de confiance attribué (310) à un émetteur de jeton ; et
la réception du jeton d'autorisation qui inclut l'indication de confiance correspondant au niveau de confiance en provenance de l'émetteur de jeton.

9. Procédé selon la revendication 7, dans lequel l'indication de confiance comprend une indication que l'application s'exécutant dans le second environnement informatique (104) n'est pas fiable.

10. Procédé selon la revendication 7, dans lequel la ressource est stockée dans le premier environnement informatique (102) ; et
dans lequel le procédé comprend en outre :
la réception du jeton d'autorisation en provenance de l'application s'exécutant dans le second environnement informatique (104) ; et
la réalisation d'une action préventive dans le premier environnement informatique (102) pour protéger la ressource (116) à la suite de la réception du jeton d'autorisation.

11. Procédé selon la revendication 10, dans lequel l'action préventive inclut la création d'une sauvegarde de la ressource (116) à la suite de la réception du jeton d'autorisation.

12. Procédé selon la revendication 10, comprenant en outre :
l'octroi d'un accès en lecture seule à la ressource (116) par le premier environnement informatique (102) à la suite de la réception du jeton d'autorisation.

13. Procédé selon la revendication 7, dans lequel la ressource est stockée dans un serveur (112) qui est configuré pour réaliser une action préventive à la suite de :
la réception du jeton d'autorisation ;
l'extraction de l'indication de confiance à partir du jeton d'autorisation ; et
la détermination que l'action préventive doit être réalisée sur la base de l'indication de confiance extraite.

14. Procédé selon la revendication 7, dans lequel le second environnement informatique comprend une machine virtuelle (104) hébergée dans le premier environnement informatique (102).

15. Support de stockage lisible par ordinateur présentant des instructions de programme enregistrées sur celui-ci, comprenant :
une logique de programme d'ordinateur pour permettre à un processeur de réaliser le procédé selon l'une quelconque des revendications 7-14.
